(19) Europäisches Patentamt
European Patent Office
Office européen des brevets

(11) EP 2 432 582 B1

(12) EUROPÄISCHE PATENTSCHRIFT

(45) Veröffentlichungstag und Bekanntmachung des Hinweises auf die Patenterteilung:
**07.05.2014 Patentblatt 2014/19**

(21) Anmeldenummer: **10723027.8**

(22) Anmeldetag: **19.05.2010**

(51) Int Cl.:
***B01J 2/16*** *(2006.01)* ***C07C 227/00*** *(2006.01)*
***C11D 3/33*** *(2006.01)* ***C11D 7/32*** *(2006.01)*
***C11D 11/02*** *(2006.01)* ***C11D 17/00*** *(2006.01)*

(86) Internationale Anmeldenummer:
**PCT/EP2010/056855**

(87) Internationale Veröffentlichungsnummer:
**WO 2010/133617 (25.11.2010 Gazette 2010/47)**

# (54) VERFAHREN ZUR HERSTELLUNG EINES SPRÜHPULVERS ENTHALTEND EIN ODER MEHRERE GLYCIN-N,N-DIESSIGSÄURE-DERIVATE UND VERWENDUNG DES SPRÜHPULVERS ZUR HERSTELLUNG VON PRESSAGGLOMERATEN

METHOD FOR PRODUCING A SPRAY POWDER CONTAINING ONE OR MORE GLYCINE-N,N-DIACETIC ACID DERIVATIVES AND USE OF THE SPRAY POWDER TO PRODUCE COMPRESSION AGGLOMERATES

PROCÉDÉ DE FABRICATION D'UNE POUDRE OBTENUE PAR SÉCHAGE PAR PULVÉRISATION, QUI CONTIENT UN OU PLUSIEURS DÉRIVÉS DE L'ACIDE GLYCINE-N,N-DIACÉTIQUE, ET UTILISATION DE CETTE POUDRE POUR LA FABRICATION D'AGGLOMÉRATS COMPRIMÉS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.05.2009 EP 09160717**
**22.10.2009 US 253911 P**

(43) Veröffentlichungstag der Anmeldung:
**28.03.2012 Patentblatt 2012/13**

(73) Patentinhaber: **BASF SE**
**67056 Ludwigshafen (DE)**

(72) Erfinder:
- **MRZENA, Frank**
**67112 Mutterstadt (DE)**
- **SCHOENHERR, Michael**
**67227 Frankenthal (DE)**
- **HEINZ, Robert**
**67067 Ludwigshafen (DE)**
- **HEIDENFELDER, Thomas**
**69493 Hirschberg (DE)**

(74) Vertreter: **Reitstötter - Kinzebach**
**Patentanwälte**
**Im Zollhof 1**
**67061 Ludwigshafen (DE)**

(56) Entgegenhaltungen:
**EP-A2- 0 845 456** **WO-A1-2006/002954**
**DE-A1- 10 123 621** **DE-A1- 19 543 162**

- **[Online] 15 August 2012, Gefunden im Internet: <URL:wikipedia.org/wiki/maschinengeschirrspülmittel> [gefunden am 2012-08-15]**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Herstellung eines Sprühpulvers enthaltend ein oder mehrere Glycin-N,N-diessigsäurederivate, eine Verwendung des Sprühpulvers zur Herstellung von Pressagglomeraten, sowie eine Verwendung der Pressagglomerate zum Einsatz in festen oder flüssigen Reinigungsmitteln, insbesondere zur Herstellung von Tabs für Geschirrspülmaschinen.

Zur Herstellung von Waschmitteln, insbesondere Textilwaschmitteln, oder Reinigungsmitteln, insbesondere Geschirrreinigungsmitteln, können feste oder flüssige Formulierungen gewählt werden.

Wasch- oder Reinigungsmittel enthalten in der Regel Komplexbildner für Jodalkali- und Schwermetallionen. Als solche werden häufig Glycin-N,N-diessigsäure-Derivate eingesetzt.

Diese werden in Form von Sprühpulvern eingesetzt, die, ausgehend von wässrigen Lösungen, die aus der Synthese kommen, durch Sprühtrocknung gewonnen werden. Die Sprühpulver müssen ein möglichst hohes Schüttgewicht aufweisen, häufig im Bereich von etwa 0,3 bis 0,7 kg/l und müssen eine Restfeuchte in einem relativ engen Konzentrationsbereich, von etwa 4 bis 8 % Wasser aufweisen, um lagerfähig zu sein, und für den nächstfolgenden Verfahrensschritt, der Verarbeitung zu Pressagglomeraten, geeignet zu sein. Sprühpulver mit einem höheren Wassergehalt würden zu schnell verklumpen, während Sprühpulver mit einem zu niedrigen Wassergehalt schlecht verarbeitbar sind.

Darüber hinaus sollen Sprühpulver gut rieselfähig sein.

Es ist bekannt, dass Sprühpulver unterschiedliche Partikelformen ausbilden, insbesondere Hohlkugeln, die, je nach Wandstärke, auch zerbrochen sein können, Vollkugeln oder Nadeln.

Hohlkugeln sind, neben Vollkugeln, besonders gut rieselfähig, haben ein gewünschtes hohes Schüttgewicht, im Bereich von etwa 0,5 bis 0,7 kg/l und sind, insbesondere auch als Hohlkugelbruch, ideal zum Kompaktieren geeignet. Nadeln sind zwar ebenfalls zum Kompaktieren geeignet, rieseln aber schlecht und haben ein niedriges Schüttgewicht, im Bereich von etwa 0,2 bis 0,5 kg/l. Vollkugeln haben zwar ein großes Schüttgewicht und rieseln gut, sind aber zum Kompaktieren ungeeignet.

Die Sprühpulver aus Komplexbildnern, insbesondere Glycin-N,N-diessigsäure-Derivaten, werden, entweder allein oder unter Zumischung von Polyethylenglykolen, häufig in einem Anteil von etwa 2 bis 10 %, zwischen zwei Walzen oder Stempeln verpresst, nachfolgend zerkleinert und fraktioniert, unter Erhalt von Pressagglomeraten.

Die Pressagglomerate müssen häufig eine vorgegebene Körnung, insbesondere im Bereich von etwa 0,3 bis 1,6 mm, und entsprechend mittlere Korngrößen im Bereich von etwa 0,6 bis 0,7 mm, aufweisen, damit eine ähnliche Körnung für alle Einsatzstoffe in einem weiteren Verfahrensschritt, dem Verpressen zu Tabs für Geschirrspülmaschinen, gewährleistet ist. Dies ist für eine gute Mischbarkeit aller Einsatzstoffe, und insbesondere die Verhinderung der Entmischung derselben bei der Herstellung von Tabs für Geschirrspülmaschinen notwendig.

Es war Aufgabe der Erfindung, ein Verfahren zur Verfügung zu stellen, wonach Sprühpulver in großtechnischem Maßstab erhalten werden können, die den obigen Anforderungen entsprechen.

Die Lösung besteht in einem Verfahren zur Herstellung eines Sprühpulvers enthaltend ein oder mehrere Glycin-N,N-diessigsäure-Derivate der allgemeinen Formel (I)

$$MOOC\text{-}CHR\text{-}N(CH_2COOM)_2 \qquad (I),$$

mit der Bedeutung

R für $C_{1-12}$-Alkyl und

M für Alkalimetall,

ausgehend von einer wässrigen Lösung enthaltend das eine oder die mehreren Glycin-N,N-diessigsäure-Derivate, die unter Zuführung von Luft sprühgetrocknet wird, das dadurch gekennzeichnet ist, dass

- die wässrige Lösung das eine oder die mehreren Glycin-N,N-diessigsäure-Derivatein einem Anteil von ≥ 84 Gew.-%, bezogen auf das Gesamtgewicht der Trockenmasse, enthält, und dass
- die Sprühtrocknung in einem Trocknungsapparat erfolgt, dem die wässrige Lösung und die Luft im Gleichstrom, mit einem Temperaturgefälle zwischen der wässrigen Lösung und der Luft im Bereich von 70 bis 350 °C zugeführt werden, und dass
- im Trocknungsapparat die wässrige Lösung in feine Flüssigkeitströpfchen zerstäubt wird, indem

sie auf eine oder mehrere Scheiben geleitet wird, die mit einer Umfangsgeschwindigkeit von ≥ 100 m/s rotieren, oder indem

sie mittels einer Pumpe auf einen Druck ≥ 20 bar absolut gebracht wird und bei diesem Druck über eine oder mehrere Düsen in den Trocknungsapparat eingeleitet wird.

Es wurde gefunden, dass Sprühpulver enthaltend ein oder mehrere Glycin-N,N-diessigsäure-Derivate erhalten werden können, die nicht nur ausgezeichnete Eigenschaften bezüglich Schüttgewicht, Rieselfähigkeit und Lagerstabilität aufweisen, sondern die sich auch darüber hinaus ausgezeichnet kompaktieren lassen, unter Erhalt von Pressagglomeraten mit den geforderten hohen Festigkeiten bzw. geringem Abrieb.

Es wurde überraschend gefunden, dass sich die Festigkeit von Pressagglomeraten sprunghaft verbessert, wenn hierfür Sprühpulver eingesetzt werden, die, wie von den Erfindern vorgeschlagen, von wässrigen

Lösungen ausgehen, die das eine oder die mehreren Glycin-N,N-diessigsäure-Derivate in hoher Reinheit und somit mit einem niedrigen Anteil an Nebenkomponenten aus der Synthese, enthalten, ausgehend von wässrigen Lösungen, die das eine oder die mehreren Glycin-N,N-diessigsäure-Derivate in einem Anteil von ≥ 84% Gew.-%, bezogen auf das Gesamtgewicht der Trockenmasse, enthalten.

Hierfür eignen sich insbesondere Glycin-N,N-diessigsäure-Derivate, die nach dem Verfahren der DE-A 43 19 935 gewonnen wurden, indem man entsprechende 2-Alkyl- bzw. 2-Alkenylglycine oder 2-Alkyl- bzw. 2-Alkenylglycinnitrile oder verdoppelte Glycine der Formel

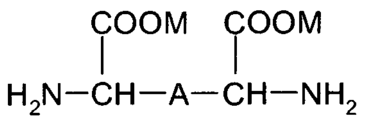

oder verdoppelte Glycinnitrile der Formel

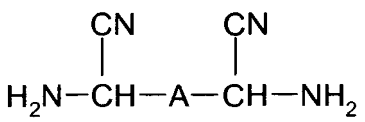

mit Formaldehyd und Cyanwasserstoff oder Alkalimetallcyanid oder

Iminodiessigsäure oder Iminodiacetonitril mit entsprechenden Monoaldehyden oder Dialdehyden der Formel OHC-A-CHO und Cyanwasserstoff oder Alkalimetallcyanid umsetzt und anschließend noch vorhandene Nitrilgruppen zu Carboxylgruppen hydrolysiert.

Darüber hinaus wird das erfindungsgemäße Verfahren in Trocknungsapparaten durchgeführt, die bevorzugt dergestalt betrieben werden, dass ein Sprühpulver erhalten wird, das einen hohen Anteil an Hohlkugeln und/oder Hohlkugelbruch aufweist.

Dies wird durch eine scharfe Trocknung erreicht, indem ein starkes treibendes Temperaturgefälle zwischen der wässrigen Lösung, die sprühgetrocknet wird, und der hierfür eingesetzten heißen Luft gewährleistet wird und indem die Trocknung in einem Trocknungsapparat durchgeführt wird, der Einrichtungen aufweist, die die sprühzutrocknende wässrige Lösung in sehr feine Tröpfchen, mit einer Tröpfchengröße im Bereich von etwa 20 bis 100 µm verteilen.

Das erforderliche treibende Temperaturgefälle wird erreicht, indem die wässrige Lösung und die zur Trocknung eingesetzte Luft dem Trocknungsapparat mit einem Temperaturunterschied im Bereich von etwa 70 bis 350 °C, bevorzugt im Bereich von etwa 150 bis 250°C, zugeführt werden.

Insbesondere wird die wässrige Lösung bei einer Temperatur im Bereich von etwa 20 bis 120°C und die zur Trocknung eingesetzte Luft bei einer Temperatur im Bereich von etwa 150 bis 250°C dem Trocknungsapparat zugeführt.

Bevorzugt wird eine wässrige Lösung eingesetzt, die das eine oder die mehreren Glycin-N,N-diessigsäure-Derivate in einer Gesamtkonzentration von 20 bis 60%, bezogen auf das Gesamtgewicht der wässrigen Lösung, enthält.

Die erforderliche feine Zerstäubung der wässrigen Lösung kann erreicht werden, indem diese auf eine oder mehrere schnell, mit einer Umfangsgeschwindigkeit von ≥ 100 m/s drehende Scheiben aufgegeben werden. Dies wird in so genannten Scheibentrocknern, die mit einer entsprechenden Rotationsgeschwindigkeit der Scheiben betrieben werden, erreicht.

Es ist auch möglich, die erforderliche sehr feine Zerstäubung der wässrigen Lösung dadurch zu erreichen, dass diese mittels einer Pumpe auf einen Druck, der ≥ 20 bar absolut ist, gebracht und bei diesem Druck einer oder mehreren Düsen zugeführt wird, die im Trocknungsapparat angeordnet sind. Bevorzugt kann hierfür eine Membranpumpe eingesetzt werden.

Weiter bevorzugt wird die wässrige Lösung auf einen Druck ≥ 30 bar absolut gebracht.

Die auf einen erhöhten Druck gebrachte wässrige Lösung kann einer bis 30 Düsen, insbesondere einer bis 20 Düsen zugeführt werden, wobei jede Düse eine Öffnung bevorzugt im Bereich von 1 bis 4 mm aufweist.

Die Zerstäubung der wässrigen, auf hohe Drücke gebrachten Lösung erfolgt in Düsentrocknern, die dem Fachmann bekannt sind, beispielsweise aus Masters: Spray Drying Handbook.

Im erfindungsgemäßen Verfahren wird ein Sprühpulver zur Verfügung gestellt, das ein oder mehrere Glycin-N,N-diessigsäure-Derivate der allgemeinen Formel (I) enthält:

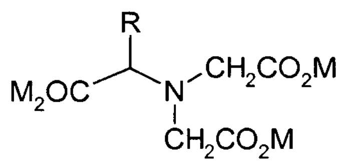

(I)

in der

R für $C_1$- bis $C_{12}$-Alkyl und

M Alkalimetall bedeuten.

In den Verbindungen der allgemeinen Formel (I) bedeutet M ein Alkalimetall, bevorzugt Natrium oder Kalium, besonders bevorzugt Natrium.

R ist ein $C_{1-12}$-Alkylrest, bevorzugt ein $C_{1-6}$-Alkylrest, besonders bevorzugt ein Methyl- oder Ethylrest. Besonders bevorzugt wird als Komponente (a) ein Alkalisalz von Methylglycindiessigsäure (MGDA) eingesetzt. Ganz besonders bevorzugt wird das Trinatriumsalz von

Methylglycindiessigsäure eingesetzt.

Das eine oder die mehreren Glycin-N,N-diessigsäure-Derivate werden als wässrige Lösung, bevorzugt mit einer Konzentration von 20 bis 60 Gew.-%, bezogen auf das Gesamtgewicht der Lösung, eingesetzt.

Bevorzugt wird ein Sprühpulver mit einem Anteil an Hohlkugeln und/oder Hohlkugelbruch von insgesamt ≥ 60 % erhalten, wobei dieser nach der folgenden Methode bestimmt wird: Dispergieren einer Probe des Sprühpulvers in einem Silikonöl, Anfertigen einer Durchlichtaufnahme mit einer etwa 56 bis 300-fachen Vergrößerung und Auszählen der Partikel, die als Hohlkugeln und/oder Hohlkugelbruch vorliegen sowie der Gesamtheit der Partikel der Durchdichtaufnahme und Berechnung des prozentualen Anteils der Partikel, die als Hohlkugeln und/oder Hohlkugelbruch vorliegen, bezogen auf die Gesamtheit der Partikel.

Bevorzugt wird nach dem erfindungsgemäßen Verfahren ein Sprühpulver mit Anteil an Hohlkugeln und Hohlkugelbruch von insgesamt ≥ 80 % erhalten.

Gegenstand der Erfindung ist auch die Verwendung des nach dem oben beschriebenen Verfahren erhaltenen Sprühpulvers zur Herstellung von Pressagglomeraten durch Verpressen des Sprühpulvers, gegebenenfalls zusammen mit weiteren Komponenten, insbesondere Polyethylenglykolen, bevorzugt in einem Anteil zwischen 2 und 10 Gew.-% und/oder weiteren Additiven, zwischen zwei Walzen oder Stempeln, nachfolgender Zerkleinerung und Fraktionierung. Die hierbei erhaltenen Pressagglomerate weisen hohe Festigkeiten und entsprechend niedrigen Abrieb auf.

Die Festigkeiten wurden nach der folgenden Methode bestimmt:

Es wurden zylindrische Presslinge mit einem Durchmesser von 12 mm und einer Höhe von 4 mm bei 200 MPas Pressdruck hergestellt und die Bruchkraft auf einem Tablettentester WHT II® der Firma Pharmatest/Hainburg gemessen. Aus den Werten für die Bruchkraft (BK), die Höhe (H) und den Durchmesser (D) des Presslings wurde nach der nachfolgenden Formel die Festigkeit (TS) (tensile strength) bestimmt:

$$TS = BK \times 2 / (D \times H \times \pi)$$

Mit den nach dem erfindungsgemäßen Verfahren hergestellten Sprühpulvern wurden Festigkeiten von ≥ 1,45 MPas erreicht.

Diese Festigkeiten entsprechen niedrigen Werten für den Abrieb in der Größenordnung von < 5%. Der Abrieb wurde bestimmt, indem eine Probe von zerkleinertem und fraktioniertem Material, insbesondere aus einem Pressling mit einer Korngröße zwischen 0,3 und 1,6 mm, bei 500 μm 2 min lang vorgesiebt und der Siebrückstand gewogen wurde. Diese Probe wurde dann 10 min lang auf einem Vibrationssieb bei 2 mm Amplitude beansprucht und der Siebdurchgang bestimmt. Dieser Durchgang wird vorliegend als Abrieb bezeichnet.

Gegenstand der Erfindung ist auch die Verwendung der Pressagglomerate, erhalten durch Einsatz eines nach dem erfindungsgemäßen Verfahren hergestellten Sprühpulvers in festen oder flüssigen Wasch- oder Reinigungsmitteln, insbesondere zur Herstellung von Tabs für Geschirrspülmaschinen.

Die Erfindung wird im Folgenden anhand von Ausführungsbeispielen näher erläutert.

Ausführungsbeispiel 1 (zum Vergleich)

Ausgegangen wurde von einer wässrigen Ausgangslösung von 39,4 Gew.-% des Trinatriumsalzes der Methylglycin-N,N-diessigsäure (MGDA) bzw. 81,5 Gew.-% MGDA, bezogen auf das Gesamtgewicht der Trockenmasse der wässrigen Ausgangslösung. Hieraus wurde in einem technischen Düsenturm ein Sprühpulver mit einem Restgehalt von 6,5 Gew.-% Wasser und eine Hohlkugelanteil von ca. 15% erzeugt. Dieses Pulver wurde anschließend unter Zusatz von 7 Gew.-% Polyethylenglykol verpresst.

Erhalten wurde ein Pressagglomerat (Kompaktat) mit einer Festigkeit (TS), bestimmt nach der vorstehend angegebenen Methode, von 0,77 MPas.

Ausführungsbeispiel 2 (erfindungsgemäß)

Ausgegangen wurde von einer wässrigen Ausgangslösung von 39,8 Gew.-% MGDA, bzw. 84,8 Gew.% MGDA, bezogen auf das Gesamtgewicht der Trockenmasse.

Hieraus wurde in einem technischen Scheibenturm bei 12.900 U/Min. ein Sprühpulver erzeugt, das eine Restfeuchte von 6,0% und einen Hohlkugelanteil von ca. 85% aufwies. Dieses wurde, wie z.B. in Beispiel 1 beschrieben, mit Polyethylenglykol verpresst.

Erhalten wurden Pressagglomerate (Kompaktate) mit einer Festigkeit von 1,99 MPas.

Ausführungsbeispiel 3 (erfindungsgemäß)

Ausgegangen wurde von einer wässrigen Ausgangslösung von 39,9 Gew.-% MGDA, bzw. 87,1 Gew.-% MGDA, bezogen auf das Gesamtgewicht der Trockenmasse.

Hieraus wurde in einem technischen Düsenturm ein Sprühpulver erzeugt, das eine Restfeuchte von 0,5% und einen Hohlkugelanteil von ca. 10% aufwies.

Das Pressagglomerat (Kompaktat) hatte eine Festigkeit von 1,9 MPas.

Die obigen Beispiele belegen somit deutlich verbesserte Festigkeiten für Pressagglomerate, die ausgehend von wässrigen Lösungen erhalten wurden, die das MGDA in hoher Reinheit, von ≥ 84% Gew.-% bezogen auf das Gesamtgewicht der Trockenmasse, enthalten.

**Patentansprüche**

1. Verfahren zur Herstellung eines Sprühpulvers enthaltend ein oder mehrere Glycin-N,N-diessigsäure-Derivate der allgemeinen Formel (I)

   MOOC-CHR-N($CH_2$COOM)$_2$ (I),

   mit der Bedeutung

   R für $C_{1-12}$-Alkyl und
   M für Alkalimetall,

   ausgehend von einer wässrigen Lösung enthaltend das eine oder die mehreren Glycin-N,N-diessigsäure-Derivate, die unter Zuführung von Luft sprühgetrocknet wird, **dadurch gekennzeichnet, dass**

   - die wässrige Lösung das eine oder die mehreren Glycin-N,N-diessigsäure-Derivate in einem Anteil von ≥ 84% Gew.-%, bezogen auf das Gesamtgewicht der Trockenmasse, enthält, und dass
   - die Sprühtrocknung in einem Trocknungsapparat erfolgt,

   dem die wässrige Lösung und die Luft im Gleichstrom, mit einem Temperaturgefälle zwischen der wässrigen Lösung und der Luft im Bereich von 70 bis 350 °C zugeführt werden, und dass

   - im Trocknungsapparat die wässrige Lösung in feine Flüssigkeitströpfchen zerstäubt wird, indem

   sie auf eine oder mehrere Scheiben geleitet wird, die mit einer Umfangsgeschwindigkeit von ≥ 100 m/s rotieren, oder indem
   sie mittels einer Pumpe auf einen Druck ≥ 20 bar absolut komprimiert wird und bei diesem Druck über eine oder mehrere Düsen in den Trocknungsapparat eingeleitet wird.

2. Verfahren nach Anspruch 1, **dadurch gekennzeichnet, dass** als Glycin-N,N-diessigsäure-Derivat ein oder mehrere Alkalisalze der Methylglycindiessigsäure eingesetzt werden.

3. Verfahren nach Anspruch 1 oder 2, **dadurch gekennzeichnet, dass** der Trocknungsapparat ein Scheibentrockner ist.

4. Verfahren nach Anspruch 1 oder 2, **dadurch gekennzeichnet, dass** der Trocknungsapparat ein Düsentrockner ist.

5. Verfahren nach einem der Ansprüche 1 bis 4, **dadurch gekennzeichnet, dass** die wässrige Lösung das eine oder die mehreren Glycin-N,N-diessigsäure-Derivate in einer Gesamtkonzentration von 20 bis 60 Gew.-%, bezogen auf das Gesamtgewicht der wässrigen Lösung, enthält.

6. Verfahren nach einem der Ansprüche 1 bis 5, **dadurch gekennzeichnet, dass** die wässrige Lösung des einen oder der mehreren Glycin-N,N-diessigsäure-Derivate mit einer Temperatur von etwa 20 bis 120°C und die Luft mit einer Temperatur von etwa 150 bis 250°C zugeführt wird.

7. Verfahren nach einem der Ansprüche 1, 2 oder 4 bis 6, **dadurch gekennzeichnet, dass** die Pumpe eine Membranpumpe ist.

8. Verfahren nach einem der Ansprüche 1, 2 oder 4 bis 7, **dadurch gekennzeichnet, dass** die wässrige Lösung mittels der Pumpe auf einen Druck ≥ 30 bar absolut gebracht wird.

9. Verfahren nach einem der Ansprüche 1 bis 8, **dadurch gekennzeichnet, dass** ein Sprühpulver mit einem Anteil an Hohlkugeln und/oder Hohlkugelbruch ≥ 60% erhalten wird, der nach der folgenden Methode bestimmt wird: Dispergieren einer Probe des Sprühpulvers in einem Silikonöl, Anfertigen einer Durchlichtaufnahme mit einer etwa 56 bis 300-fachen Vergrößerung und Auszählen der Partikel, die als Hohlkugeln und/oder Hohlkugelbruch vorliegen sowie der Gesamtheit der Partikel der Durchdichtaufnahme und Berechnung des prozentualen Anteils der Partikel, die als Hohlkugeln und/oder Hohlkugelbruch vorliegen, bezogen auf die Gesamtheit der Partikel.

10. Verwendung des nach einem Verfahren nach einem der Ansprüche 1 bis 9 erhaltenen Sprühpulvers zur Herstellung von Pressagglomeraten, mit oder ohne Zusatz eines Polyethylenglykols.

11. Verwendung der Pressagglomerate nach Anspruch 10 zum Einsatz in festen oder flüssigen Reinigungsmitteln.

12. Verwendung nach Anspruch 11 zur Herstellung von Tabs für Geschirrspülmaschinen.

**Claims**

1. A process for the preparation of a spray powder comprising one or more glycine-N,N-diacetic acid derivatives of the general formula (I)

MOOC-CHR-$N(CH_2COOM)_2$ (I),

with the meaning

R is $C_{1-12}$-alkyl and
M is alkali metal,

starting from an aqueous solution comprising the one or more glycine-N,N-diacetic acid derivatives which is spray-dried with the introduction of air, wherein

- the aqueous solution comprises the one or more glycine-N,N-diacetic acid derivatives in a fraction of ≥ 84% by weight, based on the total weight of the dry mass, and
- the spray-drying takes place in a drying apparatus to which the aqueous solution and the air are passed cocurrently, with a temperature gradient between the aqueous solution and the air in the range from 70 to 350°C, and
- in the drying apparatus the aqueous solution is atomized into fine liquid droplets by feeding it onto one or more disks which rotate at a peripheral speed of ≥ 100 m/s, or by compressing it by means of a pump to a pressure of ≥ 20 bar absolute and, at this pressure, feeding it into the drying apparatus via one or more jets.

**2.** The process according to claim 1, wherein one or more alkali metal salts of methylglycinediacetic acid are used as glycine-N,N-diacetic acid derivative.

**3.** The process according to claim 1 or 2, wherein the drying apparatus is a disk dryer.

**4.** The process according to claim 1 or 2, wherein the drying apparatus is a spray dryer.

**5.** The process according to any one of claims 1 to 4, wherein the aqueous solution comprises the one or more glycine-N,N-diacetic acid derivatives in a total concentration of from 20 to 60% by weight, based on the total weight of the aqueous solution.

**6.** The process according to any one of claims 1 to 5, wherein the aqueous solution of the one or more glycine-N,N-diacetic acid derivatives is introduced at a temperature of from about 20 to 120°C and the air is introduced at a temperature of from about 150 to 250°C.

**7.** The process according to any one of claims 1, 2 or 4 to 6, wherein the pump is a membrane pump.

**8.** The process according to any one of claims 1, 2 or 4 to 7, wherein the aqueous solution is brought by means of the pump to a pressure of ≥ 30 bar absolute.

**9.** The process according to any one of claims 1 to 8, wherein a spray powder with a fraction of hollow spheres and/or hollow sphere breakage of ≥ 60% is obtained which is determined by the following method: disperse a sample of the spray powder in a silicone oil, prepare a transmitted light print with an approximately 56 to 300-times magnification and count out the particles which are present as hollow spheres and/or hollow sphere breakage and also the totality of the particles of the transmitted light print and calculate the percentage fraction of the particles which are present as hollow spheres and/or hollow sphere breakage, based on the totality of the particles.

**10.** The use of the spray powder obtained by a process according to any one of claims 1 to 9 for producing compression agglomerates, with or without the addition of a polyethylene glycol.

**11.** The use of the compression agglomerates according to claim 10 for use in solid or liquid cleaning compositions.

**12.** The use according to claim 11 for producing tablets for dishwashers.

## Revendications

**1.** Procédé de fabrication d'une poudre pulvérisée contenant un ou plusieurs dérivés de l'acide glycine-N,N-diacétique de formule générale (I)

MOOC-CHR-$N(CH_2COOM)_2$ (I)

dans laquelle

R signifie alkyle en $C_{1-12}$ et
M signifie un métal alcalin,

à partir d'une solution aqueuse contenant le ou les dérivés de l'acide glycine-N,N-diacétique, qui est séchée par pulvérisation avec introduction d'air, **caractérisé en ce que**

- la solution aqueuse contient le ou les dérivés de l'acide glycine-N,N-diacétique en une proportion ≥ 84 % en poids, par rapport au poids total de la masse sèche, et **en ce que**
- le séchage par pulvérisation a lieu dans un appareil de séchage,

dans lequel la solution aqueuse et l'air sont introduits à co-courant, avec un gradient de température entre la solution aqueuse et l'air dans la plage allant de 70

à 350 °C, et **en ce que**

- dans l'appareil de séchage, la solution aqueuse est pulvérisée en gouttelettes liquides fines par conduite de celle-ci sur un ou plusieurs disques qui sont mis en rotation à une vitesse périphérique ≥ 100 m/s, ou

par compression de celle-ci au moyen d'une pompe à une pression ≥ 20 bar absolu, et introduction à cette pression par une ou plusieurs buses dans l'appareil de séchage.

2. Procédé selon la revendication 1, **caractérisé en ce qu'**un ou plusieurs sels alcalins de l'acide méthylglycinediacétique sont utilisés en tant que dérivé de l'acide glycine-N,N-diacétique.

3. Procédé selon la revendication 1 ou 2, **caractérisé en ce que** l'appareil de séchage est un séchoir à disques.

4. Procédé selon la revendication 1 ou 2, **caractérisé en ce que** l'appareil de séchage est un séchoir à buses.

5. Procédé selon l'une quelconque des revendications 1 à 4, **caractérisé en ce que** la solution aqueuse contient le ou les dérivés de l'acide glycine-N,N-diacétique en une concentration totale de 20 à 60 % en poids, par rapport au poids total de la solution aqueuse.

6. Procédé selon l'une quelconque des revendications 1 à 5, **caractérisé en ce que** la solution aqueuse du ou des dérivés de l'acide glycine-N,N-diacétique est introduite à une température d'environ 20 à 120 °C et l'air à une température d'environ 150 à 250 °C.

7. Procédé selon l'une quelconque des revendications 1, 2 ou 4 à 6, **caractérisé en ce que** la pompe est une pompe à membrane.

8. Procédé selon l'une quelconque des revendications 1, 2 ou 4 à 7, **caractérisé en ce que** la solution aqueuse est portée à une pression ≥ 30 bar absolu au moyen de la pompe.

9. Procédé selon l'une quelconque des revendications 1 à 8, **caractérisé en ce qu'**une poudre pulvérisée contenant une proportion de billes creuses et/ou de fragments de billes creuses ≥ 60 % est obtenue, qui est déterminée par la méthode suivante : dispersion d'un échantillon de la poudre pulvérisée dans une huile de silicone, établissement d'une photographie en lumière transmise à un grossissement d'environ 56 à 300 fois et dénombrement des particules présentes sous la forme de billes creuses et/ou de fragments de billes creuses, ainsi que de la totalité des particules de la photographie en lumière transmise, et calcul de la proportion en pourcentage des particules présentes sous la forme de billes creuses et/ou de fragments de billes creuses, par rapport à la totalité des particules.

10. Utilisation de la poudre pulvérisée obtenue par un procédé selon l'une quelconque des revendications 1 à 9 pour la fabrication d'agglomérats comprimés, avec ou sans ajout d'un polyéthylène glycol.

11. Utilisation des agglomérats comprimés selon la revendication 10 pour une insertion dans des agents de nettoyage solides ou liquides.

12. Utilisation selon la revendication 11 pour la fabrication de tablettes pour lave-vaisselle.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4319935 A